# EUROPEAN PATENT APPLICATION

(11) **EP 4 821 777 A1**
(43) Date of publication of application: **14.10.2026**
(21) Application number: 24899493.1
(22) Date of filing: 22.10.2024
(51) Int. Cl.: B60W 30/19, B60W 10/10, B60W 40/00, B60W 50/00

(54) **SPEED VARIATION CONTROL METHOD AND APPARATUS, AND INTELLIGENT DRIVING SYSTEM AND VEHICLE**

(30) Priority: 08.12.2023 CN 202311687712
(71) Applicant: Great Wall Motor Company Limited, Baoding, Hebei 071000 (CN)
(72) Inventor: LIU, Zixu, Baoding, Hebei 071000 (CN); YANG, Zhen, Baoding, Hebei 071000 (CN)
(74) Representative: Michalski Hüttermann & Partner mbB
(86) International application number: PCT/CN2024/126425
(87) International publication number: WO 2025/118849

(57) **Abstract**

Provided in the present application are a speed variation control method and apparatus, and an intelligent driving system and a vehicle. The method comprises: acquiring vehicle state information and surrounding environment information, and determining a speed variation type and a speed variation value on the basis of the vehicle state information and the surrounding environment information, wherein the speed variation type comprises acceleration and deceleration; and determining a speed variation actuator on the basis of the speed variation type, converting the speed variation value into a target torque corresponding to the speed variation actuator, generating a target torque request on the basis of the target torque, and sending the target torque request to the speed variation actuator. By means of the technical solution of the present application, the speed variation of a vehicle is more accurately controlled on the basis of an intelligent driving system combined with vehicle state information and surrounding environment information, and a traveling link and a parking link are integrated into one link, thereby achieving the effect of increasing the speed of speed variation response and actuation.

## Description

The present disclosure claims the priority to the Chinese patent application No. 202311687712.0, entitled "SPEED VARIATION CONTROL METHOD AND APPARATUS, AND INTELLIGENT DRIVING SYSTEM AND VEHICLE", filed on December 08, 2023, with the China National Intellectual Property Administration, which is incorporated herein by reference in its entirety.

### TECHNICAL FIELD

The present disclosure relates to the technical field of vehicle control, and in particular, to a method and an apparatus for controlling speed variation, an intelligent driving system, and a vehicle.

### BACKGROUND

Currently, different links are used when a vehicle is parking and driving. During parking, an intelligent driving system of the vehicle sends a stopping distance and a maximum speed to a brake controller, and the brake controller converts the stopping distance and the maximum speed into an acceleration value or a deceleration value. The brake controller converts the acceleration value into a torque corresponding to the acceleration value and sends the torque corresponding to the acceleration value to a power controller. The brake controller converts the deceleration value into a torque corresponding to the deceleration value and executes the torque corresponding to the deceleration value. During driving, in a case of acceleration, the intelligent driving system of the vehicle sends the torque corresponding to the acceleration value to the power controller; and in a case of deceleration, the vehicle sends the deceleration value to the brake controller, so that the brake controller independently converts and distributes the deceleration value, and performs deceleration processing.

In a parking link, both acceleration and deceleration require distribution through the brake controller, which leads to problems of slow start-up from a parked state, a long gear-shift time, and a long time for crossing a speed bump. In a driving link, during deceleration, the brake controller, without considering surrounding environment information, independently determines whether to activate energy recovery, converts and distributes torque, which leads to problems of unreasonable torque distribution and driving safety. Moreover, switching time is required for switching between the driving link and the parking link, which leads to a problem of slow vehicle response.

### SUMMARY

In view of these, an objective of the present disclosure is to provide a method and an apparatus for controlling speed variation, an intelligent driving system, and a vehicle, to more accurately control a vehicle to perform speed variation by combining vehicle state information and surrounding environment information through the intelligent driving system. In addition, a driving link and a parking link are integrated into one link, thereby improving the speed of response and execution for speed variation.

Based on the above objective, the present disclosure provides a method for controlling speed variation, applied to an intelligent driving system, and the method including:
obtaining vehicle state information and surrounding environment information, and determining a type of speed variation and a value of speed variation based on the vehicle state information and the surrounding environment information, where the type of speed variation includes acceleration or deceleration; and
determining a speed-variation actuator based on the type of speed variation, converting the value of speed variation into a target torque corresponding to the speed-variation actuator, generating a target torque request based on the target torque, and sending the target torque request to the speed-variation actuator.

Based on the above objective, the present disclosure further provides an apparatus for controlling speed variation, configured in an intelligent driving system, the apparatus including a processor configured to execute program modules stored in a memory, and the program modules include:
a speed variation information determination module, configured to: obtain vehicle state information and surrounding environment information, and determine a type of speed variation and a value of speed variation based on the vehicle state information and the surrounding environment information, where the type of speed variation includes acceleration or deceleration; and
a speed variation execution module, configured to: determine a speed-variation actuator based on the type of speed variation, convert the value of speed variation into a target torque corresponding to the speed-variation actuator, generate a target torque request based on the target torque, and send the target torque request to the speed-variation actuator.

Based on the above objective, the present disclosure provides an intelligent driving system, including a memory, a processor and a computer program stored in the memory and executable on the processor, where the processor, when executing the program, implements the method for controlling speed variation provided by any embodiment of the present disclosure.

Based on the above objective, the present disclosure provides a vehicle, including the intelligent driving system provided by any embodiment of the present disclosure.

As can be seen from the above, in the method for controlling speed variation provided by the present disclosure, the intelligent driving system obtains vehicle state information and surrounding environment information, performs perception analysis on the vehicle state information and the surrounding environment information, determines a type of speed variation and a value of speed variation, and determines a speed-variation actuator based on the type of speed variation, to reasonably determine the speed-variation actuator, thereby satisfying scenario requirements. The intelligent driving system further converts the value of speed variation into a target torque corresponding to the speed-variation actuator, generates a target torque request based on the target torque, and sends the target torque request to the speed-variation actuator, thereby reducing components for joint debugging, improving response performance, achieving more accurate control of speed variation for the vehicle, and improving the effect of response and execution for speed variation.

### BRIEF DESCRIPTION OF THE DRAWINGS

FIG. 1 is a flowchart of a method for controlling speed variation according to an embodiment of the present disclosure;
FIG. 2 is a flowchart of another method for controlling speed variation according to an embodiment of the present disclosure;
FIG. 3 is a control schematic diagram of a method for controlling speed variation according to an embodiment of the present disclosure;
FIG. 4 is a structural schematic diagram of an apparatus for controlling speed variation according to an embodiment of the present disclosure; and
FIG. 5 is a hardware structural schematic diagram of an intelligent driving system according to an embodiment of the present disclosure.

### DETAILED DESCRIPTION

In the related art, longitudinal interfaces or links for a vehicle are different in driving (high-speed driving) scenarios and parking (low-speed parking) scenarios. The details are as follows.

Parking S-V (stopping distance-maximum speed) interface: a vehicle motion state is controlled by an intelligent driving system through sending a stopping distance (S) and a maximum speed (V) to a brake controller, and the brake controller converts information about S and V into a braking force to achieve deceleration. A torque is calculated and forwarded to the power controller for executing the torque to achieve acceleration.

Parking ±Ax (positive/negative acceleration) interface: a vehicle motion state is controlled by the intelligent driving system through sending positive/negative acceleration (±Ax) to the brake controller. The brake controller converts deceleration (-Ax) into a braking force to achieve deceleration. A torque is calculated based on acceleration (+Ax) and forwarded to the power controller for executing the torque to achieve acceleration.

Driving Ax+Torque (acceleration and torque) interface: acceleration is controlled by the intelligent driving system through sending torque (+Fx) to the power controller, and the power controller executes the torque to achieve vehicle acceleration; and deceleration is controlled by the intelligent driving system through sending deceleration (-Ax) to the brake controller, and the brake controller converts the deceleration into a braking force to achieve deceleration.

The above related art has the following problems in terms of parking: a relatively long parking gear-shift time, insufficiently fast start-up from a parked state, a long time for crossing a speed bump during parking, and a requirement to switch between driving interfaces and parking interfaces in driving-parking transition scenarios, which takes about 4-5 seconds. The above related art also has the following problems in terms of driving: a joint debugging procedure involves many departments, coordination is difficult and consumes a lot of time, a jointly debugged vehicle must have a brake matching prototype, the matching prototype is expensive and difficult to coordinate, and disassembly and replacement steps are cumbersome and time-consuming. Accordingly, a method for controlling speed variation is provided to integrate the driving link and the parking link into one link, thereby improving the speed of response and execution for speed variation and simplifying the joint debugging procedure.

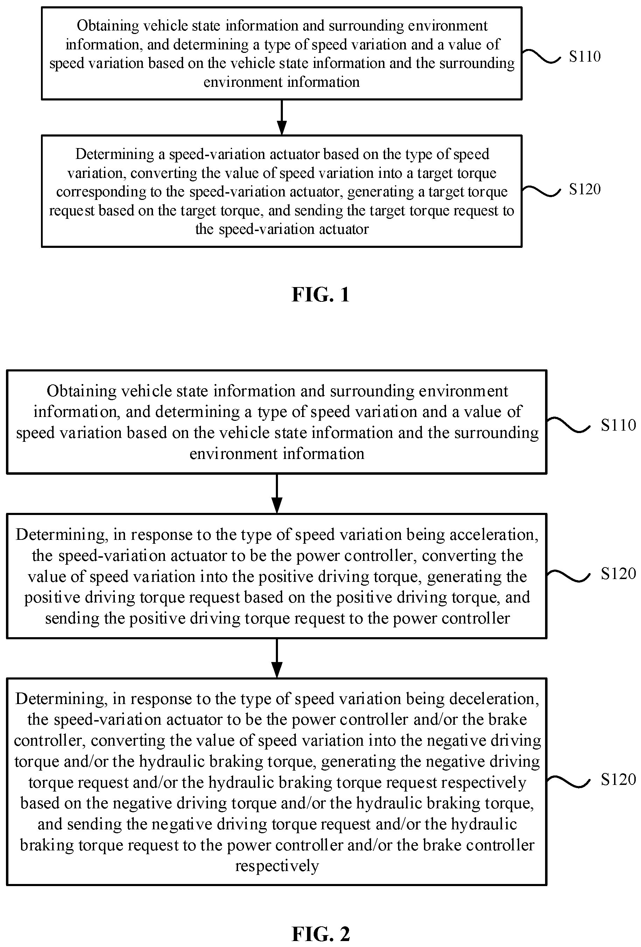

FIG. 1 is a flowchart of a method for controlling speed variation according to an embodiment of the present disclosure. This method is mainly applicable to situations where processing and execution are performed during speed variation of a vehicle. As shown in FIG. 1, the method may specifically include the following steps.

In S110, vehicle state information and surrounding environment information are obtained, and a type of speed variation and a value of speed variation are determined based on the vehicle state information and the surrounding environment information.

The vehicle state information is motion information of the vehicle itself, such as speed and heading. The surrounding environment information is information about the environment in which the vehicle is located, such as road information, surrounding vehicle state information and surrounding obstacles. The type of speed variation includes acceleration or deceleration. The value of speed variation is an acceleration value or a deceleration value.

Specifically, the vehicle state information and the surrounding environment information can be obtained by sensors installed on the vehicle. Further, by analyzing the vehicle state information and the surrounding environment information, a decision for the driving of the vehicle can be determined by a preset intelligent driving function to determine the type of speed variation and the value of speed variation.

On the basis of the above examples, the vehicle state information and the surrounding environment information can be obtained through the following method:
obtaining the vehicle state information based on an inertial measurement unit;
obtaining dynamic obstacle state information and static obstacle distance information based on a radar sensor and/or a camera device, and obtaining road information based on a positioning system and/or the camera device; and
setting the dynamic obstacle operating information, the static obstacle distance information, and the road information as the surrounding environment information.

The dynamic obstacle state information is relevant information, such as a speed, acceleration, a distance from the vehicle and a direction, of an obstacle that is in motion. The static obstacle distance information is relevant information, such as a distance from the vehicle, of an obstacle that is stationary. The road information is information used to describe road driving-related information, such as a lane line and a lane direction.

Specifically, the vehicle state information can be collected by an Inertial Measurement Unit (IMU). Further, obstacle information around the vehicle can be collected based on the radar sensor and/or the camera device, where a static obstacle and a dynamic obstacle are distinguished. The static obstacle distance information is obtained for the static obstacle, and the dynamic obstacle state information is obtained for the dynamic obstacle, so that the intelligent driving system can plan whether to avoid these obstacles and how to avoid these obstacles. Based on the positioning system, a current position of the vehicle is determined, a road where the vehicle is located is determined through a pre-configured map and the current position of the vehicle, and the road information of that road is obtained. Images of surrounding road, such as signs and lane lines, can be captured by the camera device, and the road information is determined through image analysis. The dynamic obstacle operating information, the static obstacle distance information, and the road information are combined as the surrounding environment information. Whether acceleration or deceleration for avoidance driving is required and the value of speed variation required for driving are determined based on the surrounding environment information and the vehicle state information, to ensure the safety and smoothness of the vehicle.

Optionally, determining the type of speed variation and the value of speed variation based on the vehicle state information and the surrounding environment information can be performed through the following method:
determining whether the surrounding environment information satisfies a dynamic-obstacle speed variation trigger condition and a static-obstacle trigger condition to obtain a determination result; and
determining the type of speed variation and the value of speed variation based on the determination result and the vehicle state information.

The dynamic-obstacle speed variation trigger condition is a condition for speed variation of the vehicle caused by movement of a dynamic obstacle. A static-obstacle speed variation trigger condition is a condition for speed variation of the vehicle caused by a static obstacle being too close to the vehicle.

Specifically, analysis is performed based on the surrounding environment information to determine whether a surrounding static obstacle or dynamic obstacle will trigger speed variation of the vehicle, i.e., determine whether the dynamic-obstacle speed variation trigger condition or the static-obstacle trigger condition is satisfied. In addition, further analysis is performed based on the determination result to determine the type of speed variation and the value of speed variation.

Optionally, determining the type of speed variation and the value of speed variation based on the determination result and the vehicle state information can be performed through the following method:
determining, in response to the determination result indicating that the dynamic-obstacle speed variation trigger condition is satisfied, the type of speed variation and the value of speed variation based on the dynamic obstacle operating information, the road information and the vehicle state information; or
determining, in response to the determination result indicating that the static-obstacle trigger condition is satisfied, the type of speed variation and the value of speed variation based on the static obstacle distance information, the road information and the vehicle state information; or
in response to the determination result indicating that the dynamic-obstacle speed variation trigger condition and the static-obstacle trigger condition are both satisfied,
   determining the type of speed variation based on the static obstacle distance information, the dynamic obstacle operating information, the road information and the vehicle state information;
   determining a first value of speed variation based on the static obstacle distance information, the road information and the vehicle state information;
   determining a second value of speed variation based on the dynamic obstacle operating information, the road information and the vehicle state information; and
   determining the value of speed variation based on the first value of speed variation and the second value of speed variation.

The first value of speed variation is a value of speed variation that can avoid a static obstacle and is obtained through the static obstacle distance information, and the first value of speed variation satisfies requirements of the road information, such as speed limit requirements, lane direction requirements, etc. The second value of speed variation is a value of speed variation that can avoid a dynamic obstacle and is obtained through the dynamic obstacle distance information, and the second value of speed variation satisfies requirements of the road information.

Specifically, in response to the determination result indicating that the dynamic-obstacle speed variation trigger condition is satisfied, it indicates that the dynamic obstacle has a relatively large impact on the vehicle, and analysis needs to be performed based on the dynamic obstacle operating information, the road information and the vehicle state information, to obtain the type of speed variation and the value of speed variation that satisfy road safety requirements and can ensure vehicle safety. In response to the determination result indicating that the static-obstacle speed variation trigger condition is satisfied, it indicates that the static obstacle has a relatively large impact on the vehicle, and analysis needs to be performed based on the static obstacle distance information, the road information and the vehicle state information, to obtain the type of speed variation and the value of speed variation that satisfy road safety requirements and can ensure vehicle safety. In response to the determination result indicating that the dynamic-obstacle speed variation trigger condition and the static-obstacle trigger condition are both satisfied, it indicates that both the static obstacle and the dynamic obstacle around the vehicle will cause speed variation of the vehicle. Therefore, it is necessary to analyze in combination with the vehicle state information to determine the type of speed variation and the value of speed variation that can avoid the static obstacle and the dynamic obstacle. Specifically, the first value of speed variation is determined based on the static obstacle distance information, the road information and the vehicle state information; the second value of speed variation is determined based on the dynamic obstacle operating information, the road information and the vehicle state information. Furthermore, a value of speed variation that satisfies requirements for both the first value of speed variation, the second value of speed variation requirement and the road requirement is obtained based on the first value of speed variation and the second value of speed variation.

In S120, a speed-variation actuator is determined based on the type of speed variation, the value of speed variation is converted into a target torque corresponding to the speed-variation actuator, a target torque request is generated based on the target torque, and the target torque request is sent to the speed-variation actuator.

The speed-variation actuator is a device for performing speed variation. Devices for acceleration and deceleration can be the same or different, and can be one or two. The target torque is torque information that can be executed by the speed-variation actuator. Target torques for different speed-variation actuators converted from the same value of speed variation are different. The target torque request is request information for requesting the speed-variation actuator to execute the target torque.

Specifically, based on the type of speed variation, it can be determined which speed-variation actuator to use for speed variation. Further, the value of speed variation is converted into a target torque that can be directly executed by the speed-variation actuator, a target torque request corresponding to the target torque is generated, and the target torque request is sent to the speed-variation actuator, so that the speed-variation actuator parses out the target torque and directly executes the target torque to achieve speed variation.

In the method for controlling speed variation provided by this embodiment, the intelligent driving system obtains vehicle state information and surrounding environment information, performs perception analysis on the vehicle state information and the surrounding environment information, determines a type of speed variation and a value of speed variation, and determines a speed-variation actuator based on the type of speed variation, to reasonably determine the speed-variation actuator, thereby satisfying scenario requirements. The intelligent driving system further converts the value of speed variation into a target torque corresponding to the speed-variation actuator, generates a target torque request based on the target torque, and sends the target torque request to the speed-variation actuator, thereby reducing components for joint debugging, improving response performance, achieving more accurate control of speed variation for the vehicle, and improving the effect of response and execution for speed variation.

FIG. 2 is a flowchart of another method for controlling speed variation according to an embodiment of the present disclosure. On the basis of the above implementations, optionally, for a case where the speed-variation actuator includes at least one of a power controller or a brake controller, the target torque corresponding to the power controller is a positive driving torque or a negative driving torque, the target torque corresponding to the brake controller is a hydraulic braking torque, and the target torque request includes a positive driving torque request, a negative driving torque request and a hydraulic braking torque request, the method of determining the speed-variation actuator and the method of generating the target torque request are exemplarily illustrated. Explanations of terms that are the same as or corresponding to those in the above implementations are not repeated herein. As shown in FIG. 2, the method may specifically include the following steps.

In S210, vehicle state information and surrounding environment information are obtained, and a type of speed variation and a value of speed variation are determined based on the vehicle state information and the surrounding environment information.

In S220, in response to the type of speed variation being acceleration, the speed-variation actuator is determined to be the power controller, the value of speed variation is converted into the positive driving torque, the positive driving torque request is generated based on the positive driving torque, and the positive driving torque request is sent to the power controller.

The power controller can achieve acceleration by executing a positive torque, and can also achieve deceleration by executing a negative torque for energy recovery. The positive driving torque is a positive torque that is converted from the value of speed variation and can be executed by the power controller. The positive driving torque request is request information for requesting the power controller to execute the positive driving torque.

Specifically, in response to the type of speed variation being acceleration, it can be determined that the vehicle is about to accelerate. Therefore, the speed-variation actuator is determined to be the power controller. The value of speed variation is an acceleration value in response to the type of speed variation being acceleration, and the acceleration value can be converted into a positive driving torque that can be directly executed by the power controller. A positive driving torque request corresponding to the positive driving torque is generated, and the positive driving torque request is sent to the power controller, so that the power controller parses out the positive driving torque and directly executes the positive driving torque, achieving acceleration based on the acceleration value.

In S230, in response to the type of speed variation being deceleration, the speed-variation actuator is determined to be the power controller and/or the brake controller, the value of speed variation is converted into the negative driving torque and/or the hydraulic braking torque, the negative driving torque request and/or the hydraulic braking torque request is respectively generated based on the negative driving torque and/or the hydraulic braking torque, and the negative driving torque request and/or the hydraulic braking torque request is sent to the power controller and/or the brake controller respectively.

The brake controller performs abrupt braking through hydraulic braking. The negative driving torque is a negative torque that is obtained by distributing and converting the value of speed variation and can be executed by the power controller. The negative driving torque request is request information for requesting the power controller to execute the negative driving torque. The hydraulic braking torque is a braking torque that is obtained by distributing and converting the value of speed variation and can be executed by the brake controller. The hydraulic braking torque request is request information for requesting the brake controller to execute the hydraulic braking torque.

Specifically, in response to the type of speed variation being deceleration, it can be determined that the vehicle is about to decelerate. Therefore, the speed-variation actuator is determined to be the power controller and/or the brake controller. Since the deceleration capability of the power controller is limited and the reaction and execution speed of the power controller is relatively slow, it is necessary to adjust and balance the power controller and the brake controller to execute deceleration processing. Therefore, deceleration can be executed by the power controller or the brake controller alone, or deceleration can be executed jointly by the power controller and the brake controller. The value of speed variation is a deceleration value in response to the type of speed variation being deceleration. In response to the speed-variation actuator being the power controller, the deceleration value can be converted into a negative driving torque that can be directly executed by the power controller. In response to the speed-variation actuator being the brake controller, the deceleration value can be converted into a hydraulic braking torque that can be directly executed by the brake controller. In response to the speed-variation actuator being the power controller and the brake controller, the deceleration value is distributed based on requirements, and is converted into a negative driving torque that can be directly executed by the power controller and a hydraulic braking torque that can be directly executed by the brake controller respectively. Furthermore, a negative driving torque request and/or a hydraulic braking torque request are generated respectively based on the obtained negative driving torque and/or hydraulic braking torque. The negative driving torque request is sent to the power controller, and/or the hydraulic braking torque request is sent to the brake controller, so that the power controller parses out the negative driving torque and directly executes the negative driving torque, and/or the brake controller parses out the hydraulic braking torque and directly executes the hydraulic braking torque, achieving deceleration based on the deceleration value.

On the basis of the above examples, determining the speed-variation actuator to be the power controller and/or the brake controller can be performed through the following method:
determining whether to activate a braking energy recovery function based on the vehicle state information and the surrounding environment information; and
determining, in response to the braking energy recovery function being activated, the speed-variation actuator to be the power controller and/or the brake controller based on the value of speed variation and a negative driving torque threshold of the power controller; or
determining, in response to the braking energy recovery function not being activated, the speed-variation actuator to be the brake controller.

The braking energy recovery function refers to converting thermal energy generated during braking into mechanical energy and storing the mechanical energy in a capacitor for subsequent reuse. The negative driving torque threshold is the maximum negative driving torque that the power controller is able to provide.

Specifically, it is possible to determine a response speed required during deceleration, i.e., whether abrupt deceleration needs to be executed to avoid dangers such as collisions. In response to abrupt deceleration being required to be executed, it is determined not to activate the braking energy recovery function; in response to abrupt deceleration being not required to be executed, it is determined to activate the braking energy recovery function. In response to the braking energy recovery function being activated, the value of speed variation can be distributed based on the value of speed variation and the negative driving torque threshold of the power controller, and it is determined whether to decelerate only by the power controller, or jointly by the power controller and the brake controller, i.e., the speed-variation actuator is determined to be the power controller and/or the brake controller. In response to the braking energy recovery function not being activated, it indicates that abrupt deceleration is required. The power controller with a slow response speed should not be used for deceleration, and the speed-variation actuator is determined to be the brake controller.

On the basis of the above examples, determining the speed-variation actuator to be the power controller and/or the brake controller based on the value of speed variation and the negative driving torque threshold of the power controller can be performed through the following method:
converting the value of speed variation into a speed-variation driving torque; and
determining, in response to the speed-variation driving torque being less than or equal to the negative driving torque threshold, the speed-variation actuator to be the power controller; or
determining, in response to the speed-variation driving torque being greater than the negative driving torque threshold, the speed-variation actuator to be the power controller and the brake controller.

The speed-variation driving torque is the torque corresponding to a negative drive of the power controller, where the negative drive is obtained by converting the value of speed variation completely.

Specifically, the speed-variation driving torque is the negative driving torque corresponding to the power controller obtained by converting the value of speed variation completely. In response to the speed-variation driving torque being less than or equal to the negative driving torque threshold, it indicates that the power controller alone can achieve deceleration without introducing the brake controller. In response to the speed-variation driving torque being greater than the negative driving torque threshold, it indicates that the power controller alone cannot completely achieve deceleration corresponding to a required value of speed variation, and the brake controller needs to be introduced to jointly complete the deceleration.

Optionally, after determining that the speed-variation actuator is the power controller and the brake controller, converting the value of speed variation into the negative driving torque and the hydraulic braking torque can be performed through the following method:
decomposing the value of speed variation into a value of speed variation for power and a value of speed variation for braking based on a preset ratio; and
converting the value of speed variation for power into the negative driving torque, and converting the value of speed variation for braking into the hydraulic braking torque.

The preset ratio may be a preset speed-variation ratio for allocating, between the power controller and the brake controller, deceleration to be performed. The value of speed variation for power is a deceleration value distributed to the power controller. The value of speed variation for braking is a deceleration value distributed to the brake controller.

Optionally, after converting the value of speed variation for power into the negative driving torque and converting the value of speed variation for braking into the hydraulic braking torque, the method may further include:
converting, in response to the negative driving torque being greater than a negative driving torque threshold, a difference between the negative driving torque and the negative driving torque threshold into an additional hydraulic torque, and setting the negative driving torque threshold as a value for an updated negative driving torque; and
setting a sum of the hydraulic braking torque and the additional hydraulic torque as a value for an updated hydraulic braking torque.

Optionally, after determining that the speed-variation actuator is the power controller and the brake controller, converting the value of speed variation into the negative driving torque and the hydraulic braking torque can also be performed through the following method:
converting the value of speed variation into an initial driving torque, and setting a difference between the initial driving torque and a negative driving torque threshold as a value for a to-be-converted torque; and
converting the to-be-converted torque into the hydraulic braking torque, and setting the negative driving torque threshold as a value for the negative driving torque.

The initial driving torque is the driving torque corresponding to the deceleration in which the value of speed variation is completely converted by the power controller. The to-be-converted torque is the part of the initial driving torque that cannot be executed by the power controller.

Specifically, the value of speed variation is converted into the initial driving torque. Since the power controller has a limited capacity for executing the negative driving torque, the difference between the initial driving torque and the negative driving torque threshold needs to be compensated through the brake controller. The difference between the initial driving torque and the negative driving torque threshold is set to be the to-be-converted torque, and the to-be-converted torque is converted into the hydraulic braking torque, so as to supplement the power for deceleration through the brake controller.

On the basis of the above examples, determining whether to activate the braking energy recovery function based on the vehicle state information and the surrounding environment information can be performed through the following method:
determining road information, dynamic obstacle state information, and static obstacle distance information based on the surrounding environment information;
determining whether to perform abrupt deceleration based on the vehicle state information, the road information, the dynamic obstacle state information, and the static obstacle distance information; and
   in response to determining to perform abrupt deceleration, determining not to activate the braking energy recovery function; or
   in response to determining not to perform abrupt deceleration, determining to activate the braking energy recovery function.

Specifically, the road information, the dynamic obstacle state information and the static obstacle distance information in the surrounding environment information are determined, and the road information, the dynamic obstacle state information and the static obstacle distance information are analyzed. For example, if it is determined based on the static obstacle distance information that the distance between the static obstacle and the vehicle is less than a first preset distance, it is determined that abrupt deceleration is required. The first preset distance represents that the static obstacle is too close to the vehicle, requiring emergency stop or emergency speed variation. A distance to the dynamic obstacle and an estimated time for the dynamic obstacle to collide with the vehicle can be determined based on the dynamic obstacle state information and the vehicle state information such as the vehicle position information and the speed information. In response to determining that the distance is less than a second preset distance or the time is less than a preset time, it is determined that abrupt deceleration is required. The second preset distance represents that the dynamic obstacle is too close to the vehicle, requiring an emergency stop or emergency speed variation. The preset time represents that a collision reaction time between the dynamic obstacle and the vehicle during driving is too short, requiring emergency stop or emergency speed variation. Road speed limit information can be determined based on the road information. It is determined based on a speed difference between vehicle speed information in the vehicle state information and the road speed limit information whether abrupt deceleration is required, i.e., if the speed difference is greater than a preset difference, abrupt deceleration is required to avoid violating traffic rules; otherwise, it indicates that the vehicle speed information is slightly greater than the road speed limit information, and traffic rules can be complied with without abrupt deceleration. Other analysis methods may also be used, which are not specifically limited herein. In response to determining to perform abrupt deceleration, in order to ensure the deceleration speed, it is determined not to activate the braking energy recovery function. In response to determining not to perform abrupt deceleration, the deceleration reaction time does not need to be considered, and it is determined to activate the braking energy recovery function.

On the basis of the above examples, the speed-variation actuator is the power controller and the brake controller, after sending the negative driving torque request and the hydraulic braking torque request to the power controller and the brake controller respectively, an execution situation of the power controller and whether compensation through the brake controller is required can also be determined through the following method:
receiving an executed driving torque fed back from the power controller;
converting, in response to the executed driving torque being less than the negative driving torque, a difference between the negative driving torque and the executed driving torque into a hydraulic compensation torque; and
generating a hydraulic braking compensation request based on the hydraulic compensation torque, and sending the hydraulic braking compensation request to the brake controller.

The executed driving torque is the torque actually executed by the power controller. The hydraulic compensation torque is a torque required for adjusting the brake controller to adapt to the executed driving torque of the power controller. The hydraulic braking compensation request is a request for requesting the brake controller to perform adjustment based on the hydraulic compensation torque on the basis of the hydraulic braking torque.

Specifically, the power controller feeds back the executed torque, i.e., the executed driving torque, to the intelligent driving system in real time. Further, since the executed driving torque of the power controller is unreliable and has too much delay during the braking energy recovery process, compensation from the brake controller through hydraulic braking may be needed. The requested negative driving torque is compared with the executed driving torque. In response to the executed driving torque being less than the negative driving torque, it indicates that the braking energy recovery procedure has too much delay and the response is too slow, requiring hydraulic braking compensation. The difference between the negative driving torque and the executed driving torque is converted into the hydraulic compensation torque, and a hydraulic braking compensation request corresponding to the hydraulic compensation torque is generated. The hydraulic braking compensation request is sent to the brake controller, so that the brake controller parses the hydraulic compensation torque that needs to be increased, and adds the hydraulic compensation torque on the basis of the hydraulic braking torque, thereby compensating for the deficiency of the power controller.

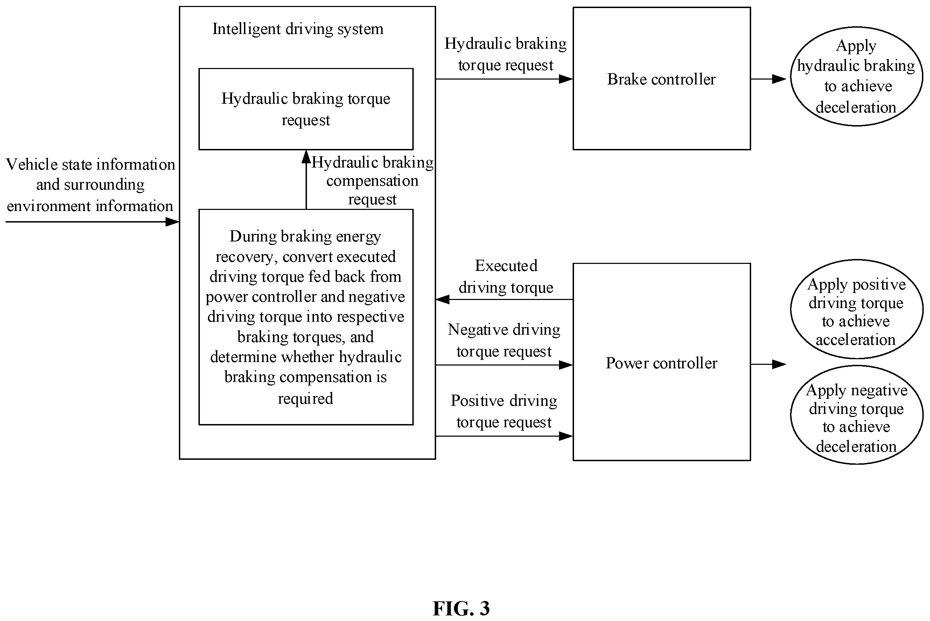

FIG. 3 is a control schematic diagram of a method for controlling speed variation according to an embodiment of the present disclosure. As shown in FIG. 3, the specific method is as follows.

The intelligent driving system determines acceleration or deceleration, and the value of speed variation, by combining vehicle state information and surrounding environment information. When the intelligent driving system requests deceleration, the intelligent driving system sends a hydraulic braking torque request to the brake controller, and/or sends a negative driving torque request to the power controller, without requesting a value of deceleration, and executes hydraulic braking and/or negative torque to achieve deceleration. When the intelligent driving system requests acceleration, the intelligent driving system sends a positive driving torque request to the power controller, and executes positive torque to achieve acceleration. The positive driving torque request and the negative driving torque request share one signal link without requiring separate processing. During vehicle driving, if it is determined that the current deceleration scenario allows the activation of a braking energy recovery function, a negative driving torque request can be sent to the power controller for braking energy recovery. Further, the power controller receives the negative driving torque request, executes the negative driving torque request after corresponding filtering, and feeds back the real-time executed driving torque to the intelligent driving system. The intelligent driving system converts the requested negative driving torque and the executed driving torque into braking torques respectively. Comparison is performed, and it is determined whether hydraulic braking compensation is required, i.e., whether there is a hydraulic compensation torque. If hydraulic braking compensation is required, the brake controller is requested to provide a corresponding hydraulic compensation torque, so as to implement compensation through hydraulic braking when the executed driving torque is unreliable and has too much delay during the braking energy recovery process.

In the method for controlling speed variation provided by this embodiment, in response to the type of speed variation being acceleration, the intelligent driving system determines the speed-variation actuator to be the power controller, converts the value of speed variation into the positive driving torque, generates the positive driving torque request based on the positive driving torque, and sends the positive driving torque request to the power controller, to perform an acceleration action through the power controller. In addition, in response to the type of speed variation being deceleration, the intelligent driving system determines the speed-variation actuator to be the power controller and/or the brake controller, converts the value of speed variation into the negative driving torque and/or the hydraulic braking torque, generates the negative driving torque request and/or the hydraulic braking torque request respectively based on the negative driving torque and/or the hydraulic braking torque, and sends the negative driving torque request and/or the hydraulic braking torque request to the power controller and/or the brake controller respectively, to effectively distinguish between using the power controller to perform the acceleration action in an energy recovery scenario and using a brake actuator to quickly perform a deceleration action. However, the above method for controlling speed variation can still be implemented using one set of control logic, effectively shortening the response time of the speed-variation actuator when the intelligent driving system controls the vehicle, improving the safety of the braking energy recovery scenario, and saving joint debugging resources and investment, so that the longitudinal control interfaces are reduced, achieving the effects of cost reduction and efficiency improvement.

The methods in the embodiments of the present disclosure can be executed by a single device, such as a computer or a server. The methods of these embodiments can also be applied in a distributed scenario, completed by multiple devices cooperating with each other. In such a distributed scenario, one device among the multiple devices may only execute one or more steps of the method in the embodiments of the present disclosure, and the multiple devices will interact with each other to complete the method.

Some embodiments of the present disclosure have been described above. Other embodiments are within the scope of the appended claims. In some cases, the actions or steps recited in the claims can be performed in an order different from that in the above embodiments and still achieve desired results. In addition, the processes depicted in the drawings do not necessarily require the specific order or sequential order shown to achieve desired results. In certain implementations, multitasking and parallel processing are also possible or may be advantageous.

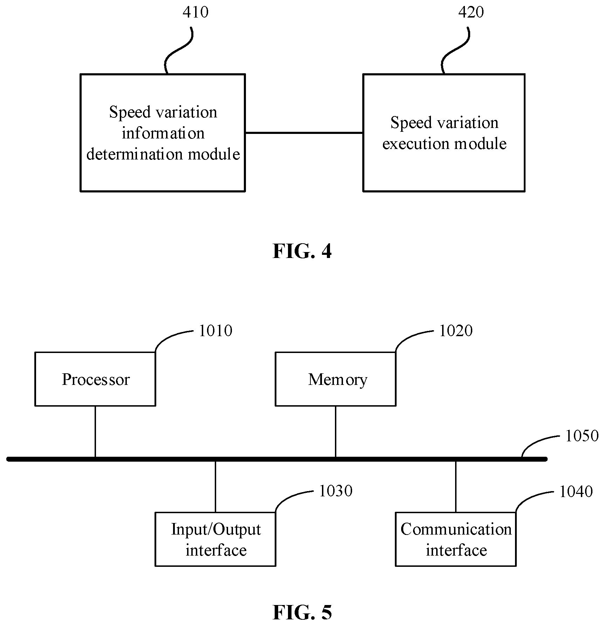

Based on the same inventive concept, corresponding to any of the above embodiment methods, the present disclosure further provides an apparatus for controlling speed variation. FIG. 4 is a structural schematic diagram of an apparatus for controlling speed variation according to an embodiment of the present disclosure. Referring to FIG. 4, the apparatus for controlling speed variation, configured in an intelligent driving system, includes: a processor configured to execute the following program modules stored in a memory:
a speed variation information determination module 410, configured to: obtain vehicle state information and surrounding environment information, and determine a type of speed variation and a value of speed variation based on the vehicle state information and the surrounding environment information, where the type of speed variation includes acceleration or deceleration; and
a speed variation execution module 420, configured to: determine a speed-variation actuator based on the type of speed variation, convert the value of speed variation into a target torque corresponding to the speed-variation actuator, generate a target torque request based on the target torque, and send the target torque request to the speed-variation actuator.

On the basis of the above examples, optionally, for a case where the speed-variation actuator includes at least one of a power controller or a brake controller, the target torque corresponding to the power controller is a positive driving torque or a negative driving torque, the target torque corresponding to the brake controller is a hydraulic braking torque, and the target torque request includes a positive driving torque request, a negative driving torque request and a hydraulic braking torque request, the speed variation execution module 420 is further configured to: determine, in response to the type of speed variation being acceleration, the speed-variation actuator to be the power controller, convert the value of speed variation into the positive driving torque, generate the positive driving torque request based on the positive driving torque, and send the positive driving torque request to the power controller; determine, in response to the type of speed variation being deceleration, the speed-variation actuator to be the power controller and/or the brake controller, convert the value of speed variation into the negative driving torque and/or the hydraulic braking torque, generate the negative driving torque request and/or the hydraulic braking torque request respectively based on the negative driving torque and/or the hydraulic braking torque, and send the negative driving torque request and/or the hydraulic braking torque request to the power controller and/or the brake controller respectively.

On the basis of the above examples, optionally, the speed variation execution module 420 is further configured to: determine whether to activate a braking energy recovery function based on the vehicle state information and the surrounding environment information; determine, in response to the braking energy recovery function being activated, the speed-variation actuator to be the power controller and/or the brake controller based on the value of speed variation and a negative driving torque threshold of the power controller; determine, in response to the braking energy recovery function not being activated, the speed-variation actuator to be the brake controller.

On the basis of the above examples, optionally, the speed variation execution module 420 is further configured to: convert the value of speed variation into a speed-variation driving torque; determine, in response to the speed-variation driving torque being less than or equal to the negative driving torque threshold, the speed-variation actuator to be the power controller; determine, in response to the speed-variation driving torque being greater than the negative driving torque threshold, the speed-variation actuator to be the power controller and the brake controller.

On the basis of the above examples, optionally, the speed variation execution module 420 is further configured to: determine road information, dynamic obstacle state information, and static obstacle distance information based on the surrounding environment information; determine whether to perform abrupt deceleration based on the vehicle state information, the road information, the dynamic obstacle state information, and the static obstacle distance information; in response to determining to perform abrupt deceleration, determine not to activate the braking energy recovery function; in response to determining not to perform abrupt deceleration, determine to activate the braking energy recovery function.

On the basis of the above examples, optionally, the speed-variation actuator is the power controller and the brake controller, the speed variation execution module 420 is further configured to: decompose the value of speed variation into a value of speed variation for power and a value of speed variation for braking based on a preset ratio; convert the value of speed variation for power into the negative driving torque, and convert the value of speed variation for braking into the hydraulic braking torque.

On the basis of the above examples, optionally, after converting the value of speed variation for power into the negative driving torque and converting the value of speed variation for braking into the hydraulic braking torque, the apparatus further includes: an adjustment module, configured to: convert, in response to the negative driving torque being greater than a negative driving torque threshold, a difference between the negative driving torque and the negative driving torque threshold into an additional hydraulic torque, and set the negative driving torque threshold as a value for an updated negative driving torque; set a sum of the hydraulic braking torque and the additional hydraulic torque as a value for an updated hydraulic braking torque.

On the basis of the above examples, optionally, the speed-variation actuator is the power controller and the brake controller, the speed variation execution module 420 is further configured to: convert the value of speed variation into an initial driving torque, and set a difference between the initial driving torque and a negative driving torque threshold as a value for a to-be-converted torque; convert the to-be-converted torque into the hydraulic braking torque, and set the negative driving torque threshold as a value for the negative driving torque.

On the basis of the above examples, optionally, the speed-variation actuator is the power controller and the brake controller, after sending the negative driving torque request and the hydraulic braking torque request to the power controller and the brake controller respectively, the apparatus further includes: a hydraulic braking compensation module, configured to: receive an executed driving torque fed back from the power controller; convert, in response to the executed driving torque being less than the negative driving torque, a difference between the negative driving torque and the executed driving torque into a hydraulic compensation torque; generate a hydraulic braking compensation request based on the hydraulic compensation torque, and send the hydraulic braking compensation request to the brake controller.

On the basis of the above examples, optionally, the speed variation information determination module 410 is further configured to: obtain the vehicle state information based on an inertial measurement unit; obtain dynamic obstacle state information and static obstacle distance information based on a radar sensor and/or a camera device, and obtain road information based on a positioning system and/or the camera device; set the dynamic obstacle operating information, the static obstacle distance information, and the road information as the surrounding environment information.

On the basis of the above examples, optionally, the speed variation information determination module 410 is further configured to: determine whether the surrounding environment information satisfies a dynamic-obstacle speed variation trigger condition and a static-obstacle trigger condition to obtain a determination result; determine the type of speed variation and the value of speed variation based on the determination result and the vehicle state information.

On the basis of the above examples, optionally, the speed variation information determination module 410 is further configured to: determine, in response to the determination result indicating that the dynamic-obstacle speed variation trigger condition is satisfied, the type of speed variation and the value of speed variation based on the dynamic obstacle operating information, the road information and the vehicle state information; determine, in response to the determination result indicating that the static-obstacle trigger condition is satisfied, the type of speed variation and the value of speed variation based on the static obstacle distance information, the road information and the vehicle state information; in response to the determination result indicating that the dynamic-obstacle speed variation trigger condition and the static-obstacle trigger condition are both satisfied, determine the type of speed variation based on the static obstacle distance information, the dynamic obstacle operating information, the road information and the vehicle state information; determine a first value of speed variation based on the static obstacle distance information, the road information and the vehicle state information; determine a second value of speed variation based on the dynamic obstacle operating information, the road information and the vehicle state information; determine the value of speed variation based on the first value of speed variation and the second value of speed variation.

For the convenience of description, the above apparatus is described by dividing functions into various modules, which are described separately. When implementing the present disclosure, the functions of each module can be implemented in the same or multiple software and/or hardware modules.

The apparatus of the above embodiments is used to implement the corresponding method for controlling speed variation in any of the foregoing embodiments, and has the beneficial effects of the corresponding method embodiments, which will not be repeated herein.

Based on the same inventive concept, corresponding to any of the above embodiment methods, the present disclosure further provides an intelligent driving system, including a memory, a processor and a computer program stored in the memory and executable on the processor, where the processor, when executing the program, implements the method for controlling speed variation of any of the above embodiments.

FIG. 5 shows a more specific hardware structural schematic diagram of an intelligent driving system provided by this embodiment. The intelligent driving system, as an electronic device, may include: a processor 1010, a memory 1020, an input/output interface 1030, a communication interface 1040, and a bus 1050. The processor 1010, the memory 1020, the input/output interface 1030 and the communication interface 1040 achieve communication connections among each other inside the device through the bus 1050.

The processor 1010 can be implemented using a general-purpose CPU (Central Processing Unit), a microprocessor, an Application Specific Integrated Circuit (ASIC), or one or more integrated circuits, etc., and is configured to execute relevant programs to implement the technical solutions provided by the embodiments of this specification.

The memory 1020 can be implemented in the form of ROM (Read Only Memory), RAM (Random Access Memory), static storage device, dynamic storage device, etc. The memory 1020 can store an operating system and other application programs. When implementing the technical solutions provided by the embodiments of this specification through software or firmware, the relevant program codes are stored in the memory 1020 and called and executed by the processor 1010.

The input/output interface 1030 is used to connect an input/output module to realize information input and output. The input/output module can be configured as a component in the device (not shown in the figure) or can be externally connected to the device to provide corresponding functions. The input device may include a keyboard, a mouse, a touch screen, a microphone, various sensors, etc., and the output device may include a display, a speaker, a vibrator, an indicator light, etc.

The communication interface 1040 is used to connect a communication module (not shown in the figure) to realize communication interaction between this device and other devices. The communication module can realize communication through wired means (such as USB, network cable, etc.) or wireless means (such as mobile network, WIFI, Bluetooth, etc.).

The bus 1050 includes a path, transmitting information among various components of the device (for example, the processor 1010, the memory 1020, the input/output interface 1030, and the communication interface 1040).

Although the above device only shows the processor 1010, the memory 1020, the input/output interface 1030, the communication interface 1040, and the bus 1050, in the specific implementation procedure, the device may also include other components necessary for normal operation. In addition, those skilled in the art can understand that the above device may also only include components necessary for implementing the solutions of the embodiments of this specification, and does not necessarily include all the components shown in the figure.

The intelligent driving system of the above embodiment is used to implement the corresponding method for controlling speed variation in any of the foregoing embodiments, and has the beneficial effects of the corresponding method embodiments, which will not be repeated herein.

Based on the same inventive concept, the present disclosure further provides a vehicle, where the vehicle includes the intelligent driving system as described in the above embodiments.

Based on the same inventive concept, corresponding to any of the above embodiment methods, the present disclosure further provides a computer-readable storage medium, the computer-readable storage medium storing computer instructions, and the computer instructions being used to cause a computer to execute the method for controlling speed variation as described in any of the above embodiments.

The computer-readable medium of this embodiment includes permanent and non-permanent, removable and non-removable media, and information storage can be realized by any method or technology. Information can be computer-readable instructions, data structures, program modules, or other data. Examples of computer storage media include, but are not limited to, Phase-change Random Access Memory (PRAM), Static Random Access Memory (SRAM), Dynamic Random Access Memory (DRAM), other types of Random Access Memory (RAM), Read Only Memory (ROM), Electrically Erasable Programmable Read Only Memory (EEPROM), flash memory or other memory technology, Compact Disc Read Only Memory (CD-ROM), Digital Versatile Disc (DVD) or other optical storage, magnetic cassette tape, magnetic tape magnetic disk storage or other magnetic storage devices or any other non-transmission medium, which can be used to store information that can be accessed by a computing device.

The computer instructions stored in the storage medium of the above embodiment are used to cause a computer to execute the method for controlling speed variation described in any of the above embodiments, and have the beneficial effects of the corresponding method embodiments, which will not be repeated herein.

Those of ordinary skill in the art should understand that: the discussion of any of the above embodiments is merely exemplary, and is not intended to imply that the scope of the present disclosure (including the claims) is limited to these examples; under the ideas of the present disclosure, technical features in the above embodiments or different embodiments can also be combined, steps can be implemented in any order, and there are many other variations of different aspects of the embodiments of the present disclosure as described above, which are not provided by detail for the sake of brevity.

In addition, to simplify illustration and discussion, and to avoid making the embodiments of the present disclosure difficult to understand, well-known power/ground connections to Integrated Circuit (IC) chips and other components may or may not be shown in the provided drawings. Moreover, the apparatus may be shown in the form of block diagrams to avoid making the embodiments of the present disclosure difficult to understand, and this also considers the fact that the details of implementation regarding these block diagram apparatuses are highly dependent on the platform on which the embodiments of the present disclosure will be implemented (i.e., these details should be fully within the understanding of those skilled in the art). In cases where specific details (e.g., circuits) are set forth to describe exemplary embodiments of the present disclosure, it will be apparent to those skilled in the art that the embodiments of the present disclosure can be implemented without these specific details or with changes to these specific details. Therefore, these descriptions should be considered illustrative rather than restrictive.

Although the present disclosure has been described in conjunction with specific embodiments thereof, many substitutions, modifications, and variations of these embodiments will be apparent to those of ordinary skill in the art based on the foregoing description. For example, other memory architectures (e.g., Dynamic RAM (DRAM)) may use the discussed embodiments.

The embodiments of the present disclosure are intended to cover all such substitutions, modifications, and variations that fall within the broad scope of the appended claims. Therefore, any omissions, modifications, equivalent substitutions, improvements, etc., made within the spirit and principles of the embodiments of the present disclosure shall be included within the protection scope of the present disclosure.

## Claims

1. A method for controlling speed variation, **characterized in that**, the method is applied to an intelligent driving system and comprises:
obtaining vehicle state information and surrounding environment information, and determining a type of speed variation and a value of speed variation based on the vehicle state information and the surrounding environment information, wherein the type of speed variation comprises acceleration or deceleration; and
determining a speed-variation actuator based on the type of speed variation, converting the value of speed variation into a target torque corresponding to the speed-variation actuator, generating a target torque request based on the target torque, and sending the target torque request to the speed-variation actuator.

2. The method according to claim 1, **characterized in that**, the speed-variation actuator comprises at least one of a power controller or a brake controller, the target torque corresponding to the power controller is a positive driving torque or a negative driving torque, the target torque corresponding to the brake controller is a hydraulic braking torque, and the target torque request comprises a positive driving torque request, a negative driving torque request and a hydraulic braking torque request; and
wherein determining the speed-variation actuator based on the type of speed variation, converting the value of speed variation into the target torque corresponding to the speed-variation actuator, generating the target torque request based on the target torque, and sending the target torque request to the speed-variation actuator comprises:
determining, in response to the type of speed variation being acceleration, the speed-variation actuator to be the power controller, converting the value of speed variation into the positive driving torque, generating the positive driving torque request based on the positive driving torque, and sending the positive driving torque request to the power controller; or
determining, in response to the type of speed variation being deceleration, the speed-variation actuator to be the power controller and/or the brake controller, converting the value of speed variation into the negative driving torque and/or the hydraulic braking torque, generating the negative driving torque request and/or the hydraulic braking torque request respectively based on the negative driving torque and/or the hydraulic braking torque, and sending the negative driving torque request and/or the hydraulic braking torque request to the power controller and/or the brake controller respectively.

3. The method according to claim 2, **characterized in that**, determining the speed-variation actuator to be the power controller and/or the brake controller comprises:
determining whether to activate a braking energy recovery function based on the vehicle state information and the surrounding environment information; and
determining, in response to the braking energy recovery function being activated, the speed-variation actuator to be the power controller and/or the brake controller based on the value of speed variation and a negative driving torque threshold of the power controller; or
determining, in response to the braking energy recovery function not being activated, the speed-variation actuator to be the brake controller.

4. The method according to claim 3, **characterized in that**, determining the speed-variation actuator to be the power controller and/or the brake controller based on the value of speed variation and the negative driving torque threshold of the power controller comprises:
converting the value of speed variation into a speed-variation driving torque; and
determining, in response to the speed-variation driving torque being less than or equal to the negative driving torque threshold, the speed-variation actuator to be the power controller; or
determining, in response to the speed-variation driving torque being greater than the negative driving torque threshold, the speed-variation actuator to be the power controller and the brake controller.

5. The method according to claim 3, **characterized in that**, determining whether to activate the braking energy recovery function based on the vehicle state information and the surrounding environment information comprises:
determining road information, dynamic obstacle state information, and static obstacle distance information based on the surrounding environment information;
determining whether to perform abrupt deceleration based on the vehicle state information, the road information, the dynamic obstacle state information, and the static obstacle distance information; and
in response to determining to perform abrupt deceleration, determining not to activate the braking energy recovery function; or
in response to determining not to perform abrupt deceleration, determining to activate the braking energy recovery function.

6. The method according to claim 2, **characterized in that**, the speed-variation actuator is the power controller and the brake controller, and converting the value of speed variation into the negative driving torque and the hydraulic braking torque comprises:
decomposing the value of speed variation into a value of speed variation for power and a value of speed variation for braking based on a preset ratio; and
converting the value of speed variation for power into the negative driving torque, and converting the value of speed variation for braking into the hydraulic braking torque.

7. The method according to claim 6, **characterized in that**, after converting the value of speed variation for power into the negative driving torque and converting the value of speed variation for braking into the hydraulic braking torque, the method further comprises:
converting, in response to the negative driving torque being greater than a negative driving torque threshold, a difference between the negative driving torque and the negative driving torque threshold into an additional hydraulic torque, and setting the negative driving torque threshold as a value for an updated negative driving torque; and
setting a sum of the hydraulic braking torque and the additional hydraulic torque as a value for an updated hydraulic braking torque.

8. The method according to claim 2, **characterized in that**, the speed-variation actuator is the power controller and the brake controller, and converting the value of speed variation into the negative driving torque and the hydraulic braking torque comprises:
converting the value of speed variation into an initial driving torque, and setting a difference between the initial driving torque and a negative driving torque threshold as a value for a to-be-converted torque; and
converting the to-be-converted torque into the hydraulic braking torque, and setting the negative driving torque threshold as a value for the negative driving torque.

9. The method according to claim 2, **characterized in that**, the speed-variation actuator is the power controller and the brake controller, and after sending the negative driving torque request and the hydraulic braking torque request to the power controller and the brake controller respectively, the method further comprises:
receiving an executed driving torque fed back from the power controller;
converting, in response to the executed driving torque being less than the negative driving torque, a difference between the negative driving torque and the executed driving torque into a hydraulic compensation torque; and
generating a hydraulic braking compensation request based on the hydraulic compensation torque, and sending the hydraulic braking compensation request to the brake controller.

10. The method according to claim 1, **characterized in that**, obtaining the vehicle state information and the surrounding environment information comprises:
obtaining the vehicle state information based on an inertial measurement unit;
obtaining dynamic obstacle state information and static obstacle distance information based on a radar sensor and/or a camera device, and obtaining road information based on a positioning system and/or the camera device; and
setting the dynamic obstacle operating information, the static obstacle distance information, and the road information as the surrounding environment information.

11. The method according to claim 10, **characterized in that**, determining the type of speed variation and the value of speed variation based on the vehicle state information and the surrounding environment information comprises:
determining whether the surrounding environment information satisfies a dynamic-obstacle speed variation trigger condition and a static-obstacle trigger condition to obtain a determination result; and
determining the type of speed variation and the value of speed variation based on the determination result and the vehicle state information.

12. The method according to claim 11, **characterized in that**, determining the type of speed variation and the value of speed variation based on the determination result and the vehicle state information comprises:
determining, in response to the determination result indicating that the dynamic-obstacle speed variation trigger condition is satisfied, the type of speed variation and the value of speed variation based on the dynamic obstacle operating information, the road information and the vehicle state information; or
determining, in response to the determination result indicating that the static-obstacle trigger condition is satisfied, the type of speed variation and the value of speed variation based on the static obstacle distance information, the road information and the vehicle state information; or
in response to the determination result indicating that the dynamic-obstacle speed variation trigger condition and the static-obstacle trigger condition are both satisfied,
determining the type of speed variation based on the static obstacle distance information, the dynamic obstacle operating information, the road information and the vehicle state information;
determining a first value of speed variation based on the static obstacle distance information, the road information and the vehicle state information;
determining a second value of speed variation based on the dynamic obstacle operating information, the road information and the vehicle state information; and
determining the value of speed variation based on the first value of speed variation and the second value of speed variation.

13. An apparatus for controlling speed variation, **characterized in that**, the apparatus is configured in an intelligent driving system and comprises a processor configured to execute program modules stored in a memory, and the program modules comprise:
a speed variation information determination module, configured to: obtain vehicle state information and surrounding environment information, and determine a type of speed variation and a value of speed variation based on the vehicle state information and the surrounding environment information, wherein the type of speed variation comprises acceleration or deceleration; and
a speed variation execution module, configured to: determine a speed-variation actuator based on the type of speed variation, convert the value of speed variation into a target torque corresponding to the speed-variation actuator, generate a target torque request based on the target torque, and send the target torque request to the speed-variation actuator.

14. An intelligent driving system, comprising a memory, a processor, and a computer program stored in the memory and executable on the processor, **characterized in that**, the processor, when executing the program, implements the method for controlling speed variation according to any one of claims 1 to 12.

15. A vehicle, **characterized by** comprising the intelligent driving system according to claim 14.
